(19) Europäisches Patentamt
European Patent Office
Office européen des brevets

(11) **EP 2 718 665 B1**

(12) **FASCICULE DE BREVET EUROPEEN**

(45) Date de publication et mention
de la délivrance du brevet:
**17.05.2017 Bulletin 2017/20**

(51) Int Cl.:
***G01B 11/14*** *(2006.01)*    ***G01B 11/30*** *(2006.01)*
***G01B 11/24*** *(2006.01)*

(21) Numéro de dépôt: **12729422.1**

(22) Date de dépôt: **08.06.2012**

(86) Numéro de dépôt international:
**PCT/EP2012/060909**

(87) Numéro de publication internationale:
**WO 2012/168436 (13.12.2012 Gazette 2012/50)**

(54) **PROCÉDÉ DE CARACTÉRISATION DE SURFACES**

VERFAHREN ZUR CHARAKTERISIERUNG VON OBERFLÄCHEN

METHOD FOR CHARACTERIZING SURFACES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.06.2011 FR 1101778**

(43) Date de publication de la demande:
**16.04.2014 Bulletin 2014/16**

(73) Titulaire: **Université de Savoie
73000 Chambery (FR)**

(72) Inventeurs:
• **SAMPER, Serge
35530 Noyal sur Vilaine (FR)**
• **FAVRELIERE, Hugues
F-86130 Saint-Georges-lès-Baillargeaux (FR)**
• **LE GOÏC, Gaëtan
89000 Auxerre (FR)**

(74) Mandataire: **Croonenbroek, Thomas Jakob et al
Innovincia
11, avenue des Tilleuls
74200 Thonon-les-Bains (FR)**

(56) Documents cités:
**US-A1- 2006 055 694    US-A1- 2009 044 610
US-A1- 2009 184 961**

**Description**

L'invention est relative à un procédé de caractérisation de surfaces utilisant la décomposition modale pour définir les composantes de forme, d'ondulation et de rugosité de la surface à caractériser.

Les industriels de différents domaines, comme celui des micro-technologies, de la biomédecine ou de l'horlogerie, souhaitent pouvoir caractériser avec précision les surfaces des objets qu'ils produisent et déterminer la présence éventuelle de défauts. De nombreuses méthodes sont actuellement en cours de développement pour répondre à ces attentes. Ces méthodes définissent l'état de surface en ordres de défauts (rupture visuelle ou géométrique, qui n'est pas acceptable comparé à la surface idéale), définis suivants des critères technologiques et mathématiques. Les deux premiers ordres de défauts que sont la taille et la position, sont classiquement traités par des modèles issus de la théorie des mécanismes. Les trois ordres suivants de défauts que sont la forme (tels que les défauts de conicité, de planéité, de circularité ou de concentricité), l'ondulation et la rugosité, intéressent plus particulièrement les industriels car ils sont généralement une garantie de la qualité fonctionnelle et perçue de leurs produits.

On connaît par exemple un procédé qui, à partir d'un nuage de mesures dimensionnelles obtenues sur une surface à caractériser, décompose dans une base modale, à la manière des séries de Fourier, un défaut en une somme de défauts, triés selon leur défaut de complexité (ou nombre d'ondulations). Ce procédé est issu de la théorie de la dynamique des structures après l'observation qu'une corrélation pouvait être définie entre la vibration sonore et les défauts géométriques d'une surface. Ainsi sur une mesure locale, la décomposition modale avec des modes à très courtes longueurs d'onde permet de caractériser la rugosité de la surface.

Dans ce procédé, les mesures dimensionnelles peuvent être obtenues par exemple par palpage à l'aide d'une machine de mesure tridimensionnelle (MMT). L'ensemble des mesures comporte alors une centaine, voire un millier de points pour la surface considérée. Pour garantir un bon degré de description de la surface, la densité de mesures doit être suffisante. Cependant, du fait de la limitation inhérente aux capacités de calcul généralement disponibles en industrie, cette méthode ne peut s'appliquer qu'à un nombre restreint de mesures.

US2009/ 044610 A1 décrit également un procédé de caractérisation de surface.

Un des buts de la présente invention est de proposer un procédé de caractérisation de surfaces pouvant utiliser un nombre important de mesures, par exemple compris entre plusieurs milliers et plusieurs millions de mesures par surface à caractériser, tout en conservant une capacité et un temps de calcul raisonnables pour être acceptables par l'industrie.

A cet effet, l'invention a pour objet un procédé de caractérisation de surface caractérisé en ce qu'il comporte les étapes suivantes :

- on mesure la topographie de la surface à caractériser pour déterminer un vecteur mesure,

- on interpole les vecteurs modaux d'une base modale d'un élément géométrique de référence, pour chaque emplacement mesuré de la surface à caractériser, la base modale étant une base vectorielle comportant les vecteurs modaux, préalablement stockée en mémoire pour un nombre prédéterminé de modes, les vecteurs modaux étant les modes de vibration de l'élément géométrique de référence sous forme vectorielle, issus de la résolution de l'équation de mécanique vibratoire $M \cdot \ddot{q} + K \cdot q = 0$, où M est la matrice de masse de la structure mécanique correspondant à la modélisation de la surface à caractériser, K est la matrice de raideur et q est un vecteur déplacements, afin d'obtenir une base modale interpolée dans laquelle chaque vecteur modal présente une dimension identique à la dimension du vecteur mesure, et

- on décompose le vecteur mesure dans la base modale interpolée par une opération de projection vectorielle du vecteur mesure dans la base modale interpolée, pour le nombre prédéterminé de modes afin de déterminer les contributions de chacun des modes dans la surface à caractériser.

Selon une ou plusieurs caractéristiques du procédé de caractérisation de surfaces, prise seule ou en combinaison,

- on détermine les écarts géométriques entre la surface à caractériser et une surface nominale de la surface à caractériser, on interpole la base modale de la surface nominale et on décompose le vecteur mesure des écarts géométriques dans la base modale interpolée,

- on détermine les écarts géométriques entre la surface à caractériser et un plan, on interpole la base modale du plan de référence et on décompose le vecteur mesure des écarts géométriques dans la base modale interpolée,

- on reconstruit une composante de forme de la surface à caractériser à partir des modes inférieurs à un seuil de Forme/Ondulation,

- on reconstruit une composante d'ondulation de la surface à caractériser à partir des modes compris entre un seuil de Forme/Ondulation et un seuil d'Ondulation/Rugosité,

- on reconstruit une composante de rugosité de la surface à caractériser à partir des modes supérieurs à un seuil d'Ondulation/Rugosité,

- la mesure de la topographie de la surface à caractériser est réalisée par un balayage optique,

- on mesure la topographie d'une surface à caractériser d'une pièce usinée,

- on mesure la topographie d'une surface à caractériser étalon et on utilise les amplitudes des modes obtenus pour calibrer un moyen de mesure,

- on mesure le relief d'une surface à caractériser d'un composant articulaire d'une prothèse de hanche.

Ainsi, à partir des amplitudes des modes, on visualise les défauts de la surface à caractériser à plusieurs échelles. Les premiers modes de la décomposition (basse fréquence) correspondent à la composante de forme de la surface à caractériser. Les modes suivants correspondent aux composantes d'ondulation, puis de rugosité. La décomposition modale permet ainsi de trier les défauts par ordre de fréquence et de complexité croissante, et de filtrer les surfaces selon leurs composantes de forme, d'ondulation et/ou de rugosité.

En interpolant les modes naturels de la base modale grossière, préalablement stockée en mémoire, à la dimension dense des mesures effectuées sur la surface à caractériser, on peut décomposer un nombre important de mesures, correspondant à un échantillonnage fin de la surface.

Le procédé de caractérisation de surfaces peut ainsi traiter un nombre important de mesures, de plusieurs milliers à plusieurs millions, par surface à caractériser, tout en conservant une capacité et un temps de calcul raisonnables, ce qui permet de l'installer dans un environnement industriel, par exemple sur une ligne de fabrication.

Par ailleurs, appliqué à un lot de pièces, le procédé de caractérisation de surfaces peut permettre d'identifier un défaut d'un moyen de fabrication, et de régler sa dérive éventuelle.

D'autres avantages et caractéristiques apparaîtront à la lecture de la description de l'invention, ainsi que sur les figures annexées sur lesquelles :

- la figure 1 représente une vue schématique d'un dispositif de caractérisation de surfaces,

- la figure 2 représente de façon schématique, différentes étapes d'un procédé de caractérisation de surfaces mis en oeuvre dans le dispositif de caractérisation de la figure 1,

- la figure 3 illustre la deuxième étape du procédé de caractérisation de surface,

- la figure 4 représente une photographie d'un explant de tête prothétique et un agrandissement correspondant de la surface à caractériser sélectionnée,

- la figure 5 représente un graphique 3D illustrant les mesures obtenues sur la surface à caractériser de la figure 4,

- la figure 6 représente un graphique 3D illustrant les mesures de la figure 5 après filtrage de la forme,

- la figure 7 représente le spectre modal des amplitudes obtenu pour la surface à caractériser de la figure 5,

- la figure 8 représente la reconstruction graphique de la composante de rugosité de la surface à caractériser de la figure 5,

- la figure 9 représente une photographie d'un boîtier de briquet métallique sur lequel une surface à caractériser est sélectionnée, une photographie schématique agrandie de la surface à caractériser ainsi qu'une photographie agrandie du défaut d'arrachement de la surface à caractériser,

- la figure 10 représente une reconstruction 3D des mesures obtenues sur la surface à caractériser de la figure 9,

- la figure 11 représente le spectre modal des amplitudes obtenu pour la surface à caractériser de la figure 9, et

- la figure 12 représente des reconstructions 3D des composantes de forme, d'ondulation et de rugosité du spectre modal des amplitudes de la figure 11.

Sur ces figures, les éléments identiques portent les mêmes numéros de référence.

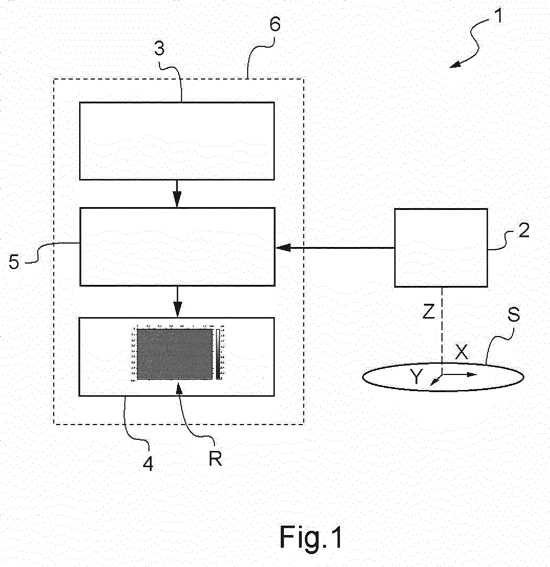

La figure 1 représente un exemple de dispositif de caractérisation de surfaces 1. Celui-ci comporte un moyen de mesure 2 de la topographie de la surface à caractériser S, un moyen de saisie 3, tel qu'un clavier, un écran d'affichage 4 et une unité de calcul 5. L'unité de calcul 5 reçoit les mesures réalisées par le moyen de mesure 2 et les données entrées sur le moyen de saisie 3, traite les données reçues et affiche le résultat sous forme graphique sur l'écran d'affichage 4. Le moyen de saisie 3, l'écran d'affichage 4 et l'unité de calcul 5 sont par exemple les éléments d'un ordinateur 6.

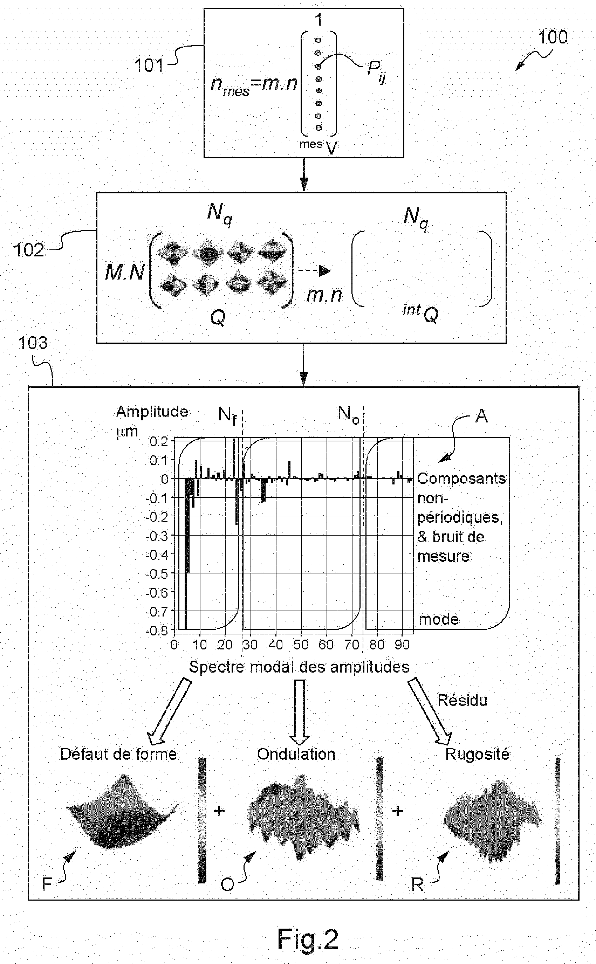

Le dispositif de caractérisation de surfaces 1 est apte à mettre en oeuvre le procédé de caractérisation de surfaces 100 représenté sur la figure 2.

Dans une première étape 101, on mesure la topographie de la surface à caractériser S à des emplacements $(X_i, Y_j)$ de la surface à caractériser S pour déterminer le vecteur mesure $^{mes}V$ de dimension $(n_{mes}, 1)$. La topographie (ou relief) de la surface est la dimension en Z (ou altitude) de la surface à caractériser, en unité de longueur.

La répartition des emplacements $(X_i, Y_j)$ et le nombre de mesures $P_{ij}$ sur la surface à caractériser S dépendent notamment du résultat recherché et du moyen de mesure 2. Les emplacements $(X_i, Y_j)$ des mesures $P_{ij}$ sont par exemple disposés suivant un maillage quadrillé défini selon des pas d'échantillonnage $\Delta X$, $\Delta Y$ dans deux directions X, Y de la surface à caractériser S, par exemple, perpendiculaires entre elles. Dans ce cas, on a la relation (1) :

$$n_{mes} = n \cdot m \hspace{4cm} (1)$$

Les emplacements des mesures peuvent être déterminés selon d'autres critères, par exemple selon d'autres formes de maillage, tel qu'un maillage triangulaire, ou de façon aléatoire.

Le vecteur mesure $^{mes}V$ obtenu associe ainsi $(n_{mes}, 1)$ valeurs de la dimension Z de la topographie de la surface à caractériser S pour chaque emplacement défini par le couple $(X_i, Y_j)$ de coordonnées de la surface à caractériser S. A l'issue de l'étape de mesure 101, pour être représentatif de la topographie de la surface à caractériser S, le vecteur mesure $^{mes}V$ peut comporter plusieurs milliers, voire plusieurs millions de mesures $P_{ij}$. Ce nuage dense de mesures est transmis à l'unité de calcul 5.

L'unité de calcul 5 présente une mémoire dans laquelle au moins une base modale Q d'un élément géométrique de référence, est stockée pour un nombre prédéterminé de modes $N_q$.

La base modale Q (ou base vectorielle) comporte une famille de descripteurs (ou fonctions discrètes) appelés modes ou modes naturels ou déformées modales naturelles. Cette famille de descripteurs est établie à partir des modes naturels de vibration de l'élément géométrique de référence (par exemple dans le cas d'une surface de référence plane, ces fonctions correspondent aux modes de vibration d'un plan) et sont issus de la résolution de l'équation connue en soi de mécanique vibratoire (2).

$$M \cdot \ddot{q} + K \cdot q = 0 \hspace{4cm} (2)$$

Où M est la matrice de masse de la structure mécanique correspondant à la modélisation de la surface à caractériser, K est la matrice de raideur (ou matrice de rigidité) de ladite structure mécanique et q est un vecteur déplacements de ladite structure mécanique. Cette équation peut être résolue analytiquement ou numériquement par la méthode des éléments finis.

La mécanique vibratoire étudie le comportement dynamique des corps.

Une modélisation de la structure mécanique conduit à considérer un assemblage de ressorts et d'inerties pour obtenir l'équation différentielle de mécanique vibratoire (2) qui détermine le comportement dynamique de la structure mécanique, comme par exemple ses fréquences de résonnance et ses réponses à des sollicitations périodiques.

L'équation (2) est obtenue à partir de la loi de conservation de l'énergie et de la loi de conservation de la masse, la structure mécanique étant caractérisée par la matrice de raideur K reliant les efforts exercés par les noeuds aux déplacements de ces noeuds et par la matrice de masse M, pour la modélisation d'une structure mécanique à plusieurs degrés de libertés qui permet notamment d'exprimer les phénomènes vibratoires avec suffisamment de richesse.

La base modale Q stockée en mémoire présente $N_q$ modes naturels définis sous forme vectorielle (appelés « vecteurs modaux »). La base modale Q présente ainsi la dimension $(m \cdot n, N_q)$.

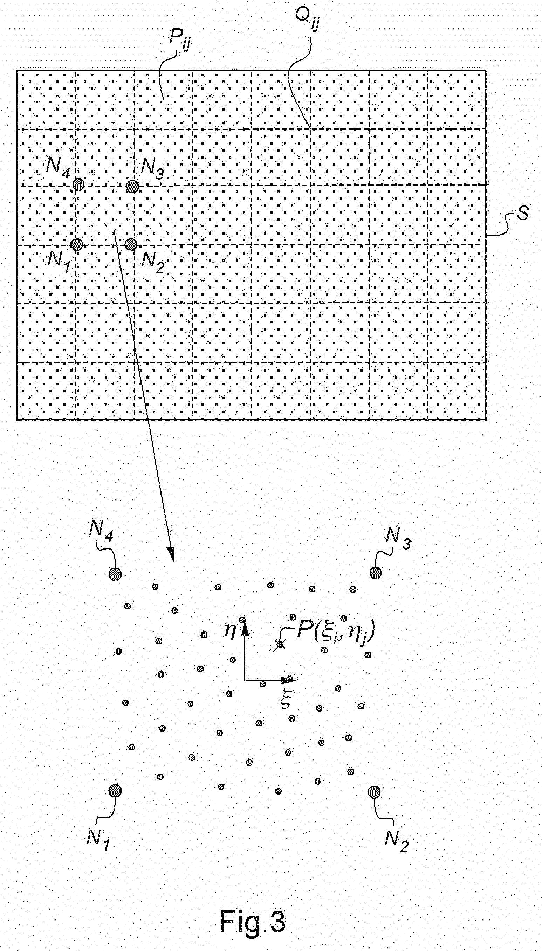

Le maillage de la base modale Q est plus grossier que celui du vecteur mesure $^{mes}V$ (voir la figure 3 où l'on a représenté un exemple de vecteur mesure obtenu pour une surface à caractériser S et des noeuds $N_1$, $N_2$, $N_3$, $N_4$ de la base modale Q associée).

Le nombre $N_q$ de modes naturels de la base modale Q peut être plus petit que le nombre de mesures du vecteur mesure $^{mes}V$. Il est choisi de manière à éviter le repliement tout en étant capable de décrire avec une bonne approximation la forme, l'ondulation et la rugosité de la surface à caractériser.

On définit par exemple une base modale Q de $N_q$=500 modes naturels pour une surface de 10 000 noeuds correspondant à un maillage grillagé grossier de 100 par 100 du vecteur mesure $^{mes}V$. La dimension de la base modale Q est alors (100·100,500).

Dans une deuxième étape 102, l'unité de calcul 5 interpole les $N_q$ vecteurs modaux de la base modale Q d'un élément géométrique de référence, pour chaque emplacement ($X_i$, $Y_j$) mesuré de la surface à caractériser S, afin d'obtenir une base modale interpolée $^{int}Q$ présentant une dimension ($n_{mes}$, $N_q$) et dans laquelle chaque mode (ou vecteur modal) présente une dimension identique à la dimension ($n_{mes}$, 1) du vecteur mesure $^{mes}V$.

Selon un premier mode de réalisation, on détermine les écarts géométriques entre les mesures de la surface à caractériser S et une surface nominale de la surface à caractériser. La surface nominale (ou surface de référence), correspond à la surface idéale (c'est-à-dire sans défauts) de la surface à caractériser S, telle qu'une surface plane, sphérique... de même nature que la surface à caractériser. La géométrie de la surface nominale est connue de l'utilisateur, par exemple sous forme de modèle CAO (pour « Dessin Assisté par Ordinateur ») ou DFN (pour « Définition de Forme Numérisée ») ou encore sous forme d'équation mathématique.

Les écarts géométriques résultent d'une association de la surface à caractériser avec la surface nominale correspondante. Ils sont par exemple déterminés par la méthode des moindres carrés, en minimisant la distance au carré entre les mesures des surfaces à caractériser et la surface nominale.

A l'issue de cette opération, le vecteur mesure $^{mes}V$ ne contient plus que les variations de topographie (écarts géométriques en Z) par rapport à la surface nominale.

On interpole ensuite la base modale Q de la surface nominale préalablement stockée en mémoire. L'unité de calcul 5 peut aussi stocker plusieurs bases modales de plusieurs surfaces nominales et laisser ensuite l'utilisateur sélectionner celle correspondant à la surface à caractériser.

Puis, on décompose le vecteur mesure $^{mes}V$ des écarts géométriques dans la base modale interpolée $^{int}Q$. Dans ce cas, à l'issue du procédé de caractérisation, on n'observe plus que les amplitudes des modes correspondant aux variations autour de la surface nominale.

Selon un deuxième mode de réalisation, on détermine les écarts géométriques entre la surface à caractériser S et un plan, on interpole la base modale Q d'un plan et on décompose le vecteur mesure $^{mes}V$ des écarts géométriques dans la base modale interpolée $^{int}Q$. Dans ce deuxième cas, à l'issue du procédé de caractérisation, la surface nominale (la forme de la surface à caractériser) est incluse dans les premiers modes associés à la composante de forme, appelés modes basse fréquence.

Pour l'interpolation proprement dite de la base modale Q, on commence par associer à chaque mesure $P_{ij}(X_i, Y_j)$ du vecteur mesure $^{mes}V$ les noeuds les plus proches du maillage de la base modale Q, les noeuds appartenant à une même maille élémentaire.

Pour cela, on associe un repère local ($\xi$, $\eta$) centré sur chaque maille élémentaire de la base modale grossière Q définie par les noeuds adjacents, tels que les quatre noeuds $N_1$, $N_2$, $N_3$, $N_4$ dans l'exemple de la figure 3. On détermine ensuite les coordonnées ($\xi_i$, $\eta_i$) de chaque mesure $P_{ij}$ dans le repère local ($\xi$, $\eta$). On retrouve les coordonnées ($\xi_1$, $\eta_i$) des mesures $P_{ij}$ dans la base modale grossière Q avec plus de facilité et donc moins de calculs, lorsque les mesures $P_{ij}$ ont été réalisées selon un maillage régulier.

Puis, on interpole certaines ou toutes les mailles élémentaires de la base modale Q pour déterminer les valeurs des modes à des positions intermédiaires correspondant aux emplacements des mesures, en utilisant les fonctions d'interpolation des éléments finis (3) :

$$P(\xi, \eta) = a \cdot N_1 + b \cdot N_2 + c \cdot N_3 + d \cdot N_4 \tag{3}$$

Avec :

$$a = (1-\xi)(1-\eta)/4$$

$$b = (1-\xi)(1-\eta)/4$$

$$c=(1-\xi)(1-\eta)/4$$

$$d=(1-\xi)(1-\eta)/4$$

On détermine ainsi une valeur du vecteur modal pour chaque emplacement mesuré.

Puis dans une troisième étape 103, on décompose le vecteur mesure $^{mes}V$ dans la base modale interpolée $^{int}Q$ pour le nombre prédéterminé de modes $N_q$, afin de déterminer les contributions $\lambda_i$ de chacun des modes dans la surface à caractériser.

L'opération de décomposition est une projection vectorielle (4) du vecteur mesure $^{mes}V$ dans la base modale interpolée $^{int}Q$ (base vectorielle) formée par les vecteurs modaux (vecteurs $^{int}Q_i$):

$$^{int}Q^{*T}\cdot{}^{mes}V=(({}^{int}Q^{T}\cdot{}^{int}Q)^{-1}\cdot{}^{int}Q^{T})^{mes}V=\lambda \qquad (4)$$

Où le vecteur résultat $\lambda$ correspond à l'ensemble des contributions $\lambda_i$ de chacun des modes, appelées coordonnées modales ou coefficients modaux.

La projection s'effectuant dans la base vectorielle $^{int}Q$ non orthogonale, il est nécessaire d'utiliser la base duale $Q^*$. Les vecteurs modaux $^{int}Q_i$ sont normés avec la norme infinie $(\|{}^{int}Q_i\|_{\infty}=1)$. Ceci nous permet d'obtenir les contributions $\lambda_i$ en valeur métrique, de façon homogène avec la surface à caractériser $S$. On peut alors exprimer la surface à caractériser $S$ sous la forme suivante (5):

$$^{mes}V=\sum_{i=1}^{N_q}\lambda_i{}^{int}Q_i+\varepsilon(N_q) \qquad (5)$$

Où $\varepsilon$ représente le résidu de la décomposition.

Les contributions $\lambda_i$ des modes naturels dans la surface à caractériser peuvent être représentées sous la forme d'un spectre modal des amplitudes A (figure 2) présentant les modes en abscisse (correspondant à un défaut élémentaire) et en ordonnée son amplitude représentative de la contribution du défaut élémentaire dans la géométrie de la surface à caractériser S. Les premiers modes de la décomposition (basse fréquence) correspondent à la composante de forme de la surface à caractériser. Les modes suivants correspondent aux composantes d'ondulation, puis de rugosité.

L'unité de calcul 5 peut afficher un graphique du spectre modal des amplitudes A sur l'écran d'affichage 4 du dispositif de caractérisation 1 pour visualiser la répartition des défauts. Pour améliorer la compréhension du résultat, on peut aussi afficher sur l'écran d'affichage 5 trois graphiques, permettant de visualiser les composantes de la surface à caractériser selon les ordres de forme, d'ondulation et de rugosité. On sélectionne pour cela une première portion du spectre modal des amplitudes A comprenant les modes inférieurs à un seuil de Forme/Ondulation $N_f$, pour reconstruire la composante de forme de la surface à caractériser (voir le graphique F sur la figure 2), suivant l'expression (6a) :

$$^{forme}V=\sum_{i=1}^{N_f}\lambda_i{}^{int}Q_i \qquad (6a)$$

On sélectionne une deuxième portion du spectre modal des amplitudes A comprenant les modes compris entre un seuil de Forme/Ondulation $N_f$ et un seuil d'Ondulation/Rugosité $N_o$ pour reconstruire une composante d'ondulation de la surface à caractériser (voir le graphique O sur la figure 2), suivant l'expression (6b) :

$$^{ondulation}V=\sum_{i=N_f+1}^{N_o}\lambda_i{}^{int}Q_i \qquad (6b)$$

On sélectionne une troisième portion du spectre modal des amplitudes comprenant les modes supérieurs à un seuil d'Ondulation/Rugosité $N_o$, pour reconstruire une composante de rugosité de la surface à caractériser (ou résidu) (voir le graphique R sur la figure 2), suivant l'expression (6c) :

$$\text{rugosité } V = \text{mes}V - \sum_{i=1}^{N_o} \lambda_i \text{ int}Q_i \tag{6c}$$

Le choix du seuil de Forme/Ondulation $N_f$ et du seuil d'Ondulation/Rugosité $N_o$ a une influence forte sur les résultats. On prévoit donc par exemple que le moyen de saisie 4 soit adapté pour paramétrer les seuils de Forme/Ondulation $N_f$ et d'Ondulation/Rugosité $N_o$. L'utilisateur pourra ainsi aisément faire varier ces seuils à la manière de curseurs et visualiser en temps réel les reconstructions partielles pour définir ce qu'il considère comme un défaut de forme, d'ondulation ou de rugosité sur la surface à considérer.

La décomposition modale permet ainsi de trier les défauts par ordre de fréquence et de complexité croissante et de filtrer les surfaces selon leurs composantes de forme, d'ondulation et/on de rugosité. On peut ainsi cartographier les défauts géométriques des surfaces à caractériser à plusieurs niveaux d'échelle.

En interpolant les modes naturels de la base modale grossière, préalablement stockée en mémoire, à la dimension dense des mesures effectuées sur la surface à caractériser, on peut décomposer un nombre important de mesures, correspondant à un échantillonnage fin de la surface, tout en conservant une capacité et un temps de calcul raisonnables.

On peut aussi utiliser le procédé de caractérisation de surface 100 pour mesurer la topographie d'une surface à caractériser étalon, quasiment sans défauts, et utiliser les amplitudes des modes obtenus pour calibrer un moyen de mesure. On peut ainsi par exemple calibrer une machine à mesurer tridimensionnelle (MMT) ou le moyen de mesure 2 du dispositif de caractérisation 1, pour améliorer la précision du moyen de mesure.

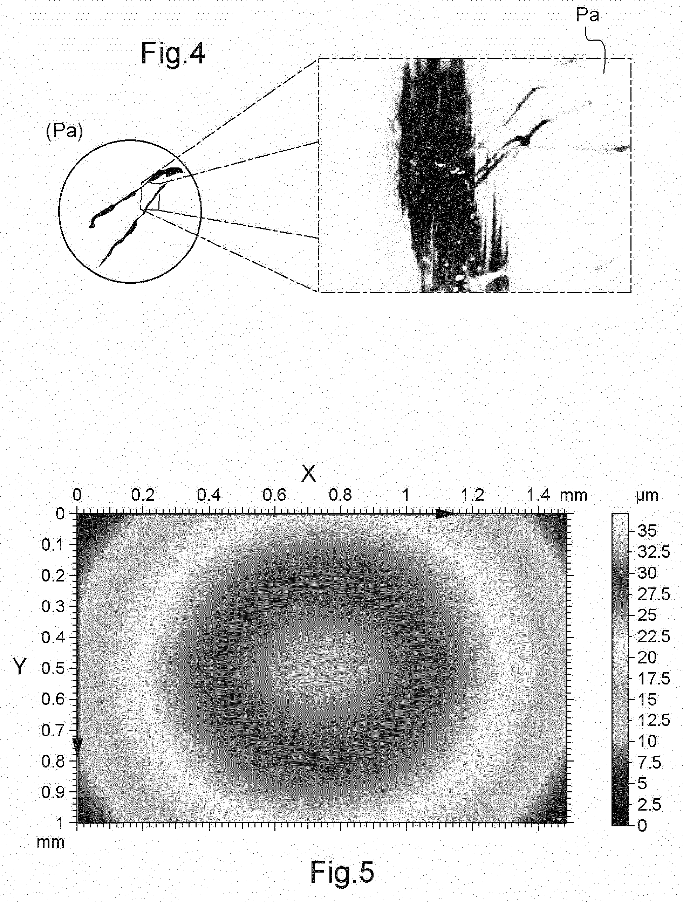

Les figures 4 à 8 illustrent un premier exemple d'application du procédé de caractérisation de surface 100 pour la caractérisation d'une surface d'un composant articulaire d'une prothèse de hanche.

Les prothèses totales de hanche comportent une cupule, une tige fémorale et une tête prothétique. La cupule (demi-sphère supérieure) loge un insert de polyéthylène, de métal ou de céramique. La tige fémorale est la partie métallique qui supporte la tête prothétique qui s'articule avec l'insert. A partir des mesures faites sur les zones de contact des composants articulaires de prothèse de hanche (tête prothétique et insert), le procédé de caractérisation 100 peut mettre en évidence les défauts de forme, d'ondulation et de rugosité et faire apparaître de potentielles bandes d'usure sur la tête et l'insert, traduisant des fractures intra-granulaires et une érosion ou des marques d'incrustations d'alliages. Ces défauts géométriques peuvent être à l'origine d'altération de la fonction et de la performance des assemblages de la prothèse.

Les figures 4 et 5 représentent ainsi un exemple de surface à caractériser Pa sphérique, prise sur un explant de tête prothétique présentant une anomalie (traces sur la photographie de la figure 4).

Dans cet exemple, la surface à caractériser Pa sélectionnée présente une longueur de 1,5 mm de longueur X et une largeur Y de 1 mm.

Le moyen de mesure 2 est dans ce cas, un moyen de mesure optique, permettant d'obtenir un nuage dense de points, de plusieurs dizaines de milliers de points à plusieurs millions de mesures par surface à caractériser. Le moyen de mesure optique utilise ici le principe de la microscopie confocale à champ étendu. Il comporte une sonde optique confocale chromatique, de profondeur de champ de $300\mu m$ et de précision axiale en Z de $0,06\mu m$. Alternativement, le moyen de mesure optique aurait pu être par exemple de type interférométrie ou triangulation laser. Ces différentes techniques permettent de mesurer très finement la topographie d'une surface à caractériser de quelques $mm^2$.

On mesure la topographie de la surface à caractériser Pa à des emplacements définis par un quadrillage régulier avec des pas d'échantillonnage $\Delta X$, $\Delta Y$, ici égaux de l'ordre de $1\mu m$. On obtient alors un vecteur mesure $\text{mes}V$ contenant ici 1 502 501 mesures de la topographie Z (en environ 35 minutes) de la surface à caractériser Pa (figure 5).

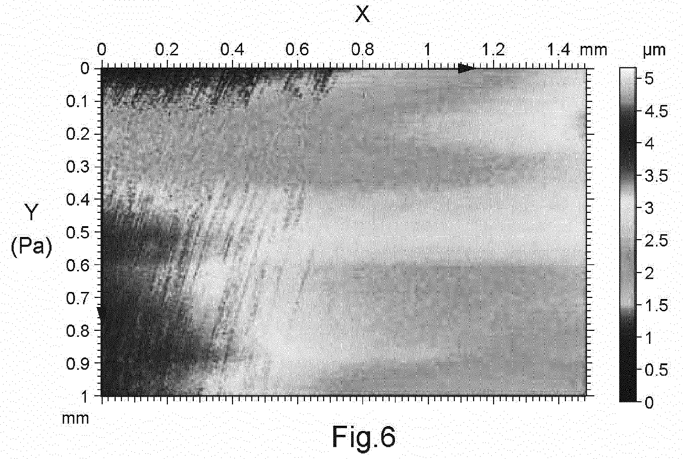

Puis, on filtre les écarts géométriques résultant d'une association de la surface à caractériser Pa avec la surface nominale sphérique, et on interpole la base modale Q d'un plan. Le calcul du rayon et de la position du centre de la sphère est par exemple obtenu par la méthode des moindres carrés en minimisant la distance au carré entre les mesures des surfaces à caractériser Pa et la surface sphérique nominale (zone de la sphère non détériorée). La figure 6 illustre la mesure obtenue après filtrage par la surface nominale sphérique et reconstruction en 3D. Les mesures $\text{mes}V$ ont ainsi été « redressées ».

Puis, on interpole les modes naturels de la base modale Q d'un plan, préalablement stockée en mémoire, pour chaque emplacement $(X_i, Y_j)$ mesuré de la surface à caractériser Pa, afin d'obtenir une base modale interpolée $\text{int}Q$ ayant $N_q$ vecteurs modaux, présentant chacun une dimension identique au vecteur mesure $\text{mes}V$.

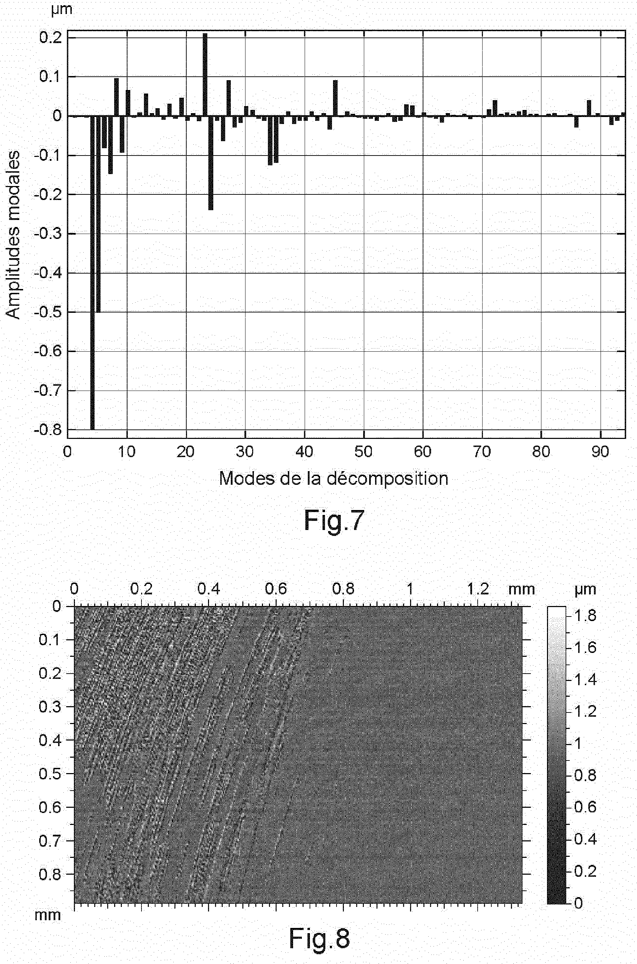

Puis, on décompose le vecteur mesure $\text{mes}V$ dans la base modale interpolée $\text{int}Q$, composée dans cet exemple, de 500 modes. Le spectre des amplitudes modales obtenu (figure 7) est contenu dans une double enveloppe décroissant rapidement. Les modes $Q_i$ sont triés par ordre de « fréquence », mais la forme de l'enveloppe, de type exponentielle décroissante, montre qu'ils sont triés simultanément par ordre de complexité croissante.

La figure 8 montre un graphique représentant la composante de rugosité pour la surface à caractériser Pa. Celle-ci présente des rayures dont on peut déterminer la profondeur avec précision. On peut ainsi facilement qualifier les défauts des surfaces à caractériser et en tirer les conséquences éventuelles sur l'éventuelle altération de la fonction souhaitée.

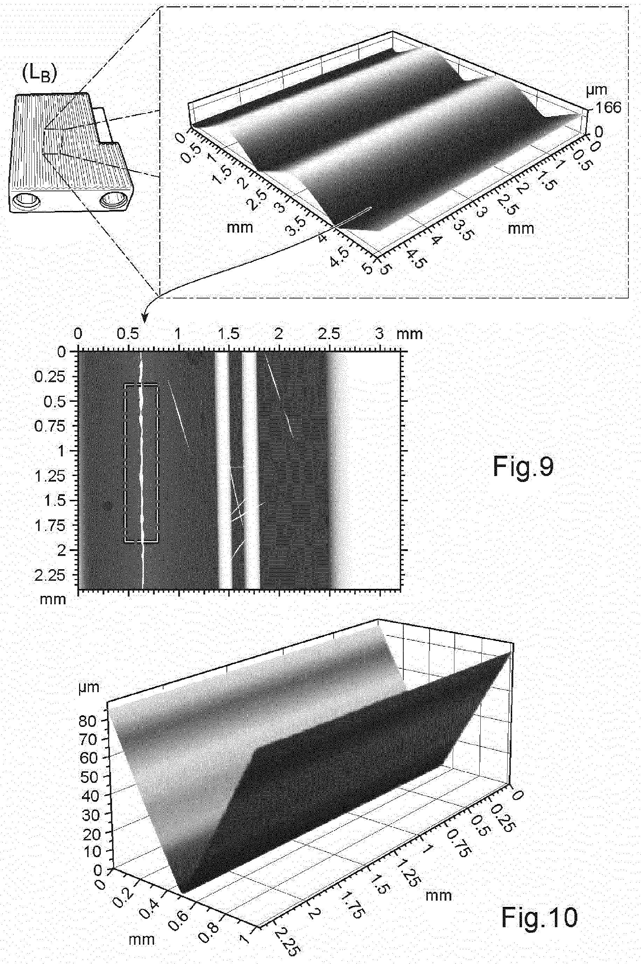

Les figures 9 à 12 illustrent un autre exemple du procédé appliqué à la caractérisation de la surface d'une pièce métallique usinée, telle que la surface d'un boîtier de briquet.

La figure 9 représente ainsi un boîtier de briquet sur lequel une surface à caractériser Lb présentant une anomalie, a été sélectionnée. La surface à caractériser Lb est « guillochée », c'est-à-dire qu'elle présente un ornement composé de traits ondés. Elle présente un défaut d'arrachement de matière en fond de guilloche, tel que l'on peut voir sur la photographie de la figure 9.

Au cours du procédé de fabrication des boîtiers des briquets, les surfaces externes du boîtier sont recouverts d'un métal précieux qui est ensuite poli manuellement afin de présenter un aspect totalement lisse. Il est nécessaire de repérer rapidement les défauts de rugosité avant de recouvrir la surface de métal précieux car le dépôt du revêtement accentue l'effet. Par ailleurs, lorsqu'un défaut survient dans le creux de la forme en V du motif guilloché, une étape rectificatrice de polissage ne permet pas de corriger ce défaut.

La surface à caractériser Lb présente une largeur de 1 mm de largeur X et une longueur Y de 2, 5 mm. On mesure la topographie de la surface à caractériser Lb à des emplacements $(X_i, Y_j)$ définis selon des pas d'échantillonnage $\Delta X$, $\Delta Y$ égaux et réguliers de l'ordre de 2 $\mu$m. La mesure la topographie de la surface à caractériser Lb (figure 10) permet de déterminer 625000 valeurs de la topographie (en environ 20 minutes) de la surface à caractériser Lb.

Dans une deuxième étape du procédé, on interpole les modes naturels d'une base modale Q d'un plan de référence, préalablement stockée en mémoire, composée de 500 vecteurs modaux de dimension 100 $\times$ 100, pour chaque emplacement $(X_i, Y_j)$ mesuré de la surface à caractériser Lb, afin d'obtenir une base modale interpolée $^{int}Q$ dont les vecteurs modaux sont de même dimension que la surface à caractériser, c'est-à-dire qu'ils sont composés de 625000 valeurs.

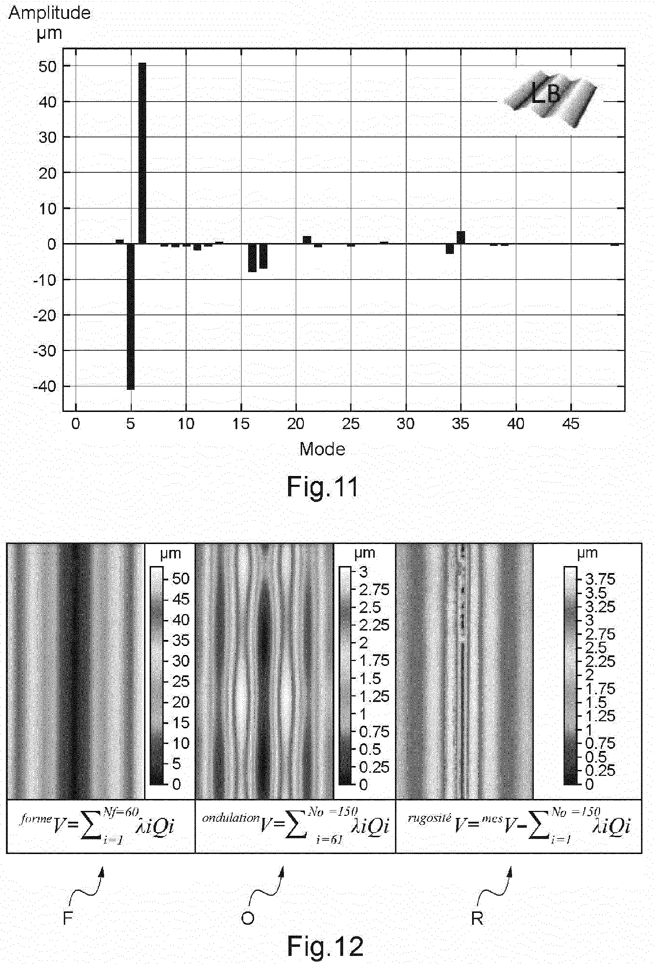

Dans une troisième étape, on décompose le vecteur mesure $^{mes}V$ dans la base modale interpolée $^{int}Q$ pour les 500 modes. Le spectre modal des amplitudes de la surface à caractériser Lb obtenu est représenté sur la figure 11. La figure 12 montre les reconstructions 3D des composantes de forme, d'ondulation et de rugosité de la surface à caractériser pour un seuil de Forme/Ondulation $N_f$ égal à 60 et un seuil d'Ondulation/Rugosité $N_o$ égal à 150. On retrouve ainsi la forme guillochée sur la composante de forme F et les dimensions du défaut d'arrachement de matière sur la composante de rugosité R. Par ailleurs, la composante d'ondulation semble présenter un défaut pouvant correspondre au polissage manuel de l'opérateur pour réduire le défaut d'arrachement.

## Revendications

**1.** Procédé de caractérisation de surface **caractérisé en ce qu'**il comporte les étapes suivantes :

- on mesure la topographie de la surface à caractériser (S, Pa, Lb) pour déterminer un vecteur mesure ($^{mes}V$),
- on interpole les vecteurs modaux d'une base modale (Q) d'un élément géométrique de référence, pour chaque emplacement $((X_i, Y_j))$ mesuré de la surface à caractériser (S, Pa, Lb), la base modale (Q) étant une base vectorielle comportant les vecteurs modaux, préalablement stockée en mémoire pour un nombre prédéterminé de vecteurs modaux, les vecteurs modaux étant les modes de vibration de l'élément géométrique de référence sous forme vectorielle, issus de la résolution de l'équation de mécanique vibratoire :

$$M \cdot \ddot{q} + K \cdot q = 0$$

où M est la matrice de masse de la structure mécanique correspondant à la modélisation de la surface à caractériser, K est la matrice de raideur et q est un vecteur déplacements, pour obtenir une base modale interpolée ($^{int}Q$) dans laquelle chaque vecteur modal présente une dimension identique à la dimension ($n_{mes}$, 1) du vecteur mesure ($^{mes}V$), et
- on décompose le vecteur mesure ($^{mes}V$) dans la base modale interpolée ($^{int}Q$) par une opération de projection vectorielle du vecteur mesure ($^{mes}V$) dans la base modale interpolée ($^{int}Q$), pour le nombre prédéterminé de modes ($N_q$) afin de déterminer les contributions ($\lambda_i$) de chacun des modes dans la surface à caractériser.

**2.** Procédé de caractérisation selon la revendication 1, dans lequel on détermine les écarts géométriques entre la surface à caractériser (S, Pa, Lb) et une surface nominale de la surface à caractériser, on interpole la base modale (Q) de la surface nominale et on décompose le vecteur mesure ($^{mes}V$) des écarts géométriques dans la base modale interpolée ($^{int}Q$).

3. Procédé de caractérisation selon la revendication 1, dans lequel on détermine les écarts géométriques entre la surface à caractériser (S, Pa, Lb) et un plan, on interpole la base modale (Q) d'un plan et on décompose le vecteur mesure ($^{mes}V$) des écarts géométriques dans la base modale interpolée ($^{int}Q$).

4. Procédé de caractérisation selon l'une des revendications 1 à 3, dans lequel on reconstruit une composante de forme de la surface à caractériser (S, Pa, Lb) à partir des modes inférieurs à un seuil de Forme/Ondulation ($N_f$).

5. Procédé de caractérisation selon l'une des revendications 1 à 4 dans lequel on reconstruit une composante d'ondulation de la surface à caractériser (S, Pa, Lb) à partir des modes compris entre un seuil de Forme/Ondulation ($N_f$) et un seuil d'Ondulation/Rugosité ($N_o$).

6. Procédé de caractérisation selon l'une des revendications 1 à 5, dans lequel on reconstruit une composante de rugosité de la surface à caractériser (S, Pa, Lb) à partir des modes supérieurs à un seuil d'Ondulation/Rugosité ($N_o$).

7. Procédé de caractérisation selon l'une des revendications précédentes, dans lequel la mesure de la topographie de la surface à caractériser (S, Pa, Lb) est réalisée par un balayage optique.

8. Procédé de caractérisation selon l'une des revendications 1 à 7, dans lequel on mesure la topographie d'une surface à caractériser (Lb) d'une pièce usinée.

9. Procédé de caractérisation selon l'une des revendications 1 à 7, dans lequel on mesure la topographie d'une surface à caractériser étalon et on utilise les amplitudes des modes obtenus pour calibrer un moyen de mesure.

10. Procédé de caractérisation selon l'une des revendications 1 à 7, dans lequel on mesure le relief d'une surface à caractériser (Pa) d'un composant articulaire d'une prothèse de hanche.

**Patentansprüche**

1. Verfahren zur Kennzeichnung einer Oberfläche, **dadurch gekennzeichnet, dass** es die folgenden Schritte aufweist:

    - Messen der Topographie der zu kennzeichnenden Oberfläche (S, Pa, Lb) zur Bestimmung eines Messvektors ($^{mes}V$),
    - Interpolieren der modalen Vektoren einer modalen Basis (Q) eines geometrischen Referenzelements für jede gemessene Stelle (($X_i$, $Y_i$)) der zu kennzeichnenden Oberfläche (S, Pa, Lb), wobei die modale Basis (Q) eine die modalen Vektoren aufweisende vektorielle Basis darstellt, die vorab für eine vorbestimmte Anzahl von modalen Vektoren in einem Speicher gespeichert wurde, wobei die modalen Vektoren die Vibrationsmodi des geometrischen Referenzelements in vektorieller Form darstellen, die aus der Lösung der schwingungsmechanischen Gleichung hervorgehen:

$$M \cdot \ddot{q} + K \cdot q = 0 \quad,$$

    wobei M die Massenmatrix der mechanischen Struktur bezeichnet, die der Modellierung der zu kennzeichnenden Oberfläche entspricht, K die Matrix der Steifigkeit und q einen Verschiebungsvektor bezeichnet, um eine interpolierte modale Basis ($^{int}Q$) zu erhalten, in der jeder modale Vektor eine Dimension aufweist, die identisch mit der Dimension ($n_{mes}$, 1) des Messvektors ($^{mes}V$) ist, und
    - Zerlegen des Messvektors ($^{mes}V$) in der interpolierten modalen Basis ($^{int}Q$) durch eine Operation der vektoriellen Projektion des Messvektors ($^{mes}V$) in der interpolierten modalen Basis ($^{int}Q$) für die vorbestimmte Anzahl der Modi ($N_q$), um den Beitrag ($\lambda_i$) eines jeden Modus in der zu kennzeichnenden Oberfläche zu bestimmen.

2. Verfahren zur Kennzeichnung nach Anspruch 1, bei dem die geometrischen Abweichungen zwischen der zu kennzeichnenden Oberfläche (S, Pa, Lb) und einer nominalen Oberfläche der zu kennzeichnenden Oberfläche bestimmt werden, die modale Basis (Q) der nominalen Oberfläche interpoliert wird und der Messvektor ($^{mes}V$) der geometrischen Abweichungen in der interpolierten modalen Basis ($^{int}Q$) zerlegt wird.

3. Verfahren zur Kennzeichnung nach Anspruch 1, bei dem die geometrischen Abweichungen zwischen der zu kennzeichnenden Oberfläche (S, Pa, Lb) und einer Ebene bestimmt werden, die modale Basis (Q) einer Ebene interpoliert wird und der Messvektor ($^{mes}V$) der geometrischen Abweichungen in der interpolierten modalen Basis ($^{int}Q$) zerlegt wird.

4. Verfahren zur Kennzeichnung nach einem der Ansprüche 1 bis 3, bei dem eine Formkomponente der zu kennzeichnenden Oberfläche (S, Pa, Lb) ausgehend von den unterhalb eines Form/Ondulation-Schwellwerts ($N_f$) liegenden Modi neu konstruiert wird.

5. Verfahren zur Kennzeichnung nach einem der Ansprüche 1 bis 4, bei dem eine Ondulationskomponente der zu kennzeichnenden Oberfläche (S, Pa, Lb) ausgehend von den Modi neu konstruiert wird, die zwischen einem Form/Ondulation-Schwellwert ($N_f$) und einem Ondulation/Rauhigkeit-Schwellwert ($N_0$) liegen.

6. Verfahren zur Kennzeichnung nach einem der Ansprüche 1 bis 5, bei dem eine Rauhigkeitskomponente der zu kennzeichnenden Oberfläche (S, Pa, Lb) ausgehend von den oberhalb eines Ondulation/Rauhigkeit-Schwellwerts ($N_0$) liegenden Modi neu konstruiert wird.

7. Verfahren zur Kennzeichnung nach einem der vorangehenden Ansprüche, bei dem das Messen der Topographie der zu kennzeichnenden Oberfläche (S, Pa, Lb) durch optische Abtastung durchgeführt wird.

8. Verfahren zur Kennzeichnung nach einem der Ansprüche 1 bis 7, bei dem die Topographie einer zu kennzeichnenden Oberfläche (Lb) eines Werkstücks gemessen wird.

9. Verfahren zur Kennzeichnung nach einem der Ansprüche 1 bis 7, bei dem die Topographie einer zu kennzeichnenden Normoberfläche gemessen wird und die Amplituden der erhaltenen Modi zum Kalibrieren eines Messmittels verwendet werden.

10. Verfahren zur Kennzeichnung nach einem der Ansprüche 1 bis 7, bei dem das Relief einer zu kennzeichnenden Oberfläche (Pa) einer Gelenkkomponente einer Hüftprothese gemessen wird.

**Claims**

1. Surface characterization method, **characterized in that** it comprises the following steps:

   - the topography of the surface to be characterized (S, Pa, Lb) is measured to determine a measurement vector ($^{mes}V$),
   - the modal vectors of a modal base (Q) of a reference geometrical element are interpolated, for each measured location (($X_i$, $Y_j$)) of the surface to be characterized (S, Pa, Lb), the modal base (Q) being a vector base comprising modal vectors, previously stored in memory for a predetermined number of modal vectors, the modal vectors being the vibration modes of the reference geometrical element in vector form, derived from the solving of the vibratory mechanics equation:

$$M \cdot \ddot{q} + K \cdot q = 0$$

   in which M is the mass matrix of the mechanical structure corresponding to the modelling of the surface to be characterized, K is the stiffness matrix and q is a displacement vector, to obtain an interpolated modal base ($^{int}Q$) in which each modal vector has a dimension identical to the dimension ($n_{mes}$, 1) of the measurement vector ($^{mes}V$), and
   - the measurement vector ($^{mes}V$) is decomposed in the interpolated modal base ($^{int}Q$) by an operation of vector projection of the measurement vector ($^{mes}V$) in the interpolated modal base ($^{int}Q$), for the predetermined number of modes (Nq) in order to determine the contributions ($\lambda_i$) of each of the modes in the surface to be characterized.

2. Characterization method according to Claim 1, in which the geometrical deviations between the surface to be characterized (S, Pa, Lb) and a nominal surface of the surface to be characterized are determined, the modal base (Q) of the nominal surface is interpolated and the measurement vector ($^{mes}V$) of the geometrical deviations is decomposed in the interpolated modal base ($^{int}Q$).

3. Characterization method according to Claim 1, in which the geometrical deviations between the surface to be characterized (S, Pa, Lb) and a plane are determined, the modal base (Q) of a plane is interpolated and the measurement vector ($^{mes}V$) of the geometrical deviations is decomposed in the interpolated modal base ($^{int}Q$).

4. Characterization method according to one of Claims 1 to 3, in which a form component of the surface to be characterized (S, Pa, Lb) is reconstructed from the modes below a form/undulation threshold ($N_f$).

5. Characterization method according to one of Claims 1 to 4, in which an undulation component of the surface to be characterized (S, Pa, Lb) is reconstructed from the modes lying between a form/undulation threshold ($N_f$) and an undulation/roughness threshold ($N_o$).

6. Characterization method according to one of Claims 1 to 5, in which a roughness component of the surface to be characterized (S, Pa, Lb) is reconstructed from the modes above an undulation/roughness threshold ($N_o$).

7. Characterization method according to one of the preceding claims, in which the measurement of the topography of the surface to be characterized (S, Pa, Lb) is performed by an optical scan.

8. Characterization method according to one of Claims 1 to 7, in which the topography of a surface to be characterized (Lb) of a machined part is measured.

9. Characterization method according to one of Claims 1 to 7, in which the topography of a reference surface to be characterized is measured and the amplitudes of the modes obtained are used to calibrate a measurement means.

10. Characterization method according to one of Claims 1 to 7, in which the relief of a surface to be characterized (Pa) of an articular component of a hip prosthesis is measured.

Fig.1

Fig.2

Fig.3

# Fig.4

(Pa)

Pa

X

0    0.2    0.4    0.6    0.8    1    1.2    1.4 mm    μm

Y

| |
0
0.1
0.2
0.3
0.4
0.5
0.6
0.7
0.8
0.9
1
mm

35
32.5
30
27.5
25
22.5
20
17.5
15
12.5
10
7.5
5
2.5
0

# Fig.5

Fig.6

Fig.7

Fig.8

Fig.9

Fig.10

Fig.11

$${}^{forme}V=\sum_{i=1}^{Nf=60}\lambda iQi$$

$${}^{ondulation}V=\sum_{i=61}^{No=150}\lambda iQi$$

$${}^{rugosité}V={}^{mes}V-\sum_{i=1}^{No=150}\lambda iQi$$

F      O      R

Fig.12

**EP 2 718 665 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

•    US 2009044610 A1